# EUROPEAN PATENT SPECIFICATION

(11) **EP 0 393 983 B1**
(45) Date of publication and mention of the grant of the patent: **08.11.1995**
(21) Application number: 90304099.6
(22) Date of filing: 17.04.1990
(51) Int. Cl.: G06K 15/12

(54) **Edge emission type EL printer and the printing method thereof**
Randemittierende EL-Drucker und dessen Druckverfahren
Imprimante à EL du type à émission latérale et sa méthode d'impression

(30) Priority: 17.04.1989 JP 97081/89
(43) Date of publication of application: 24.10.1990
(73) Proprietor: Kabushiki Kaisha TEC, Shizuoka (JP)
(72) Inventor: Tamura, Toshiyuki, Mishima, Shizuoka (JP); Mochizuki, Masaru, Shimizu, Shizuoka (JP)
(74) Representative: Tribe, Thomas Geoffrey

(56) References cited:
- EP-A- 0 099 584
- PATENT ABSTRACTS OF JAPAN, vol. 13, no. 204 (M-825), 15th May 1989; & JP-A-1 027 945 (FUJITSU LTD) 30-01-1989

## Description

### FIELD OF THE INVENTION AND RELATED ART STATEMENT:

The present invention relates to an edge emission type EL printer and a printing method thereof, the printer having a line head constituted by an array of edge emission type EL devices.

In recent years, improvements in electrophotographic printers have been paralleled by the development of diverse light-emitting devices. One of such devices is the electroluminescent (EL) device which, despite its various benefits, has been known for its often insufficient levels of luminous intensity. The disadvantage is now compensated by the development of the so-called edge emission type EL device that has turned out to be about 100 times as intense in emission as conventional EL devices. The edge emission type EL device has an optical waveguide constituted by wrapping a thin film active layer with dielectric layers. A flatly polarized beam of light is emitted from an edge of the active layer. The luminance of the device is high enough to justify growing expectations for its possible use in various applications including the printer head.

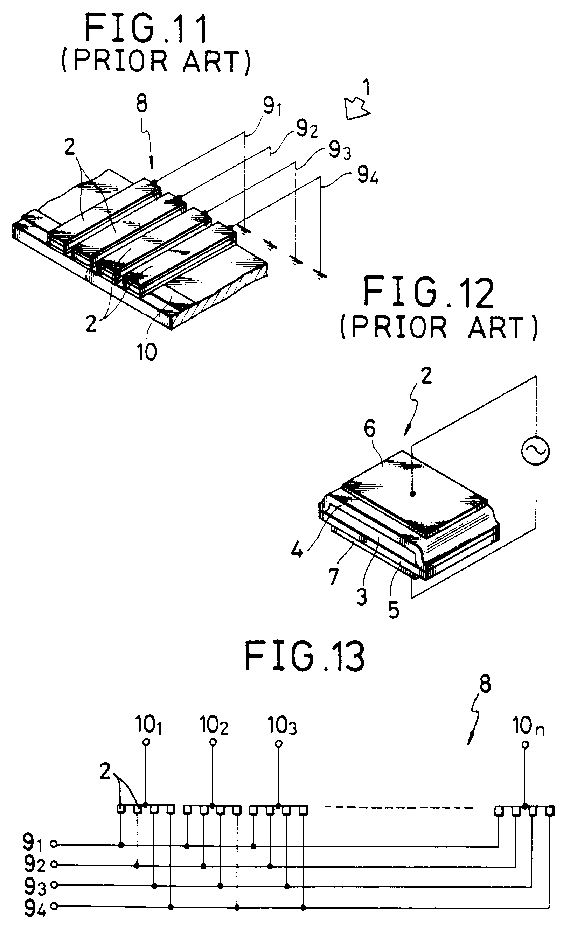

A prior art printer that uses edge emission type EL devices of the construction outlined above will now be described by referring to Figs. 11 and 12. Fig. 12 illustrates the construction of an edge emission type EL device 2 for use with a line printer 1 which is an edge emission type EL printer. The EL device 2 has a thin film active layer 3 that contains zinc sulfide and some active elements sandwiched from above and below with dielectric layers 4 and 5, respectively. The layers 4 and 5 are in turn covered from above and below with flat electrodes 6 and 7, respectively. In the line printer 1, a plurality of edge emission type EL devices 2 of the above-described construction are positioned side by side to form an array using thin film technology, thereby constituting a line head 8 (Fig. 11). The line head 8 is located adjacent to a photosensitive body, not shown, such as a photosensitive body.

This applicant proposed that the edge emission type EL devices 2 making up the line head 8 are to be wired as shown in Fig. 13. That is, blocks each comprising four EL devices has "n" block electrodes 10₁ through 10ₙ that are connected to four common electrodes 9₁ through 9₄.

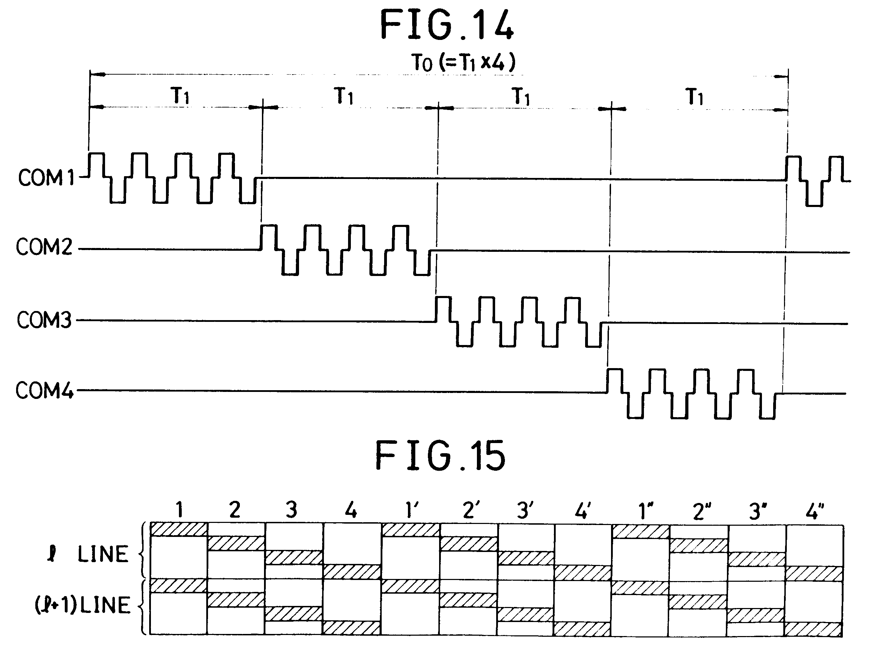

The line printer 1 of the above-described construction causes the edge emission type EL devices 2 of the line head 8 to selectively luminesce in order to produce illustratively an electrostatic latent image on the photosensitive body (drum), not shown, for printing by electrophotography. The line printer 1 regards four edge emission type EL devices 2 as a single block. As many as "n" block electrodes 10₁ through 10ₙ are each connected to the four common electrodes 9₁ through 9₄, the two groups of electrodes carrying out primary scanning in synchronization. That is, as depicted in Fig. 14, the block electrodes 10₁ through 10ₙ are scanned relative to the first to fourth common electrodes 9₁ through 9₄, consecutively in that order. If the scanning time required for scanning relative to each of the common electrodes 9₁ through 9₄ is T₁, one primary scanning line is formed within the time period of
T₀ = T₁ x 4

The line printer 1 simplifies its wiring by grouping the many edge emission type EL devices 2 into blocks of four. Within each block, however, the first dot is out of timing with the fourth dot by as long as 3 T₁. This discrepancy results in printed lines which are inclined in each block and of which the edges are serrated. Furthermore, the light emitted by the edge emission type EL device 2 is extremely polarized (e.g., 1 x 50 µm). This often leads to spots of light being dislocated in the secondary scanning direction or not being emitted long enough, causing spurious white spots to appear in the dots. Thus, as shown in Fig. 15, the image printed by the line printer 1 tends to be in poor quality because of the serrated edges and white spots dispersed therein.

The line printer disclosed in Japanese Patent Laid-open No. 63-103288 is a line printer that appears to have solved this problem. This printer has a group of edge emission type EL devices equipped with an optical system combining cylindrical lens with rod lens arrangements. In operation, a flatly polarized beam of light from each EL device is diffused only crosswise so as to provide dots of light, not shown, whose aspect ratio is close to 1. One disadvantage of this method is that it involves the use of a complicated optical system, making reductions in the yield thereof almost unavoidable. Another disadvantage is that the optical diffusion of the light from the light-emitting devices necessitates reductions in the luminance thereof, raising the possibility of leaving spurious white dots dispersed in the printed image.

### OBJECT AND SUMMARY OF THE INVENTION:

It is therefore an object of the present invention to provide a printing method which, in conjunction with a line printer, ensures printing of high quality.

It is another object of the present invention to provide a line printer which performs printing using flatly polarized beams of light from the EL devices incorporated therein without leaving spurious white spots dispersed in the print image in the secondary scanning direction.

It is a further object of the present invention to provide a line printer which prints primary scanning lines whose edges are not serrated but are substantially flat.

It is yet another object of the present invention to provide a line printer capable of high-speed printing.

According to one aspect of the present invention there is provided a printing method for an edge emission type electroluminescent printer (11) comprising a line head (29) constituted by m x n edge emission type EL devices (2) connected in matrix pattern to "m" common electrodes (32) and "n" block electrodes (30), said line head being located adjacent to a photosensitive body so that said body continuously moves relative to said line head for secondary scanning, said line head admitting a print signal so as to generate dot emission onto said photosensitive body for primary scanning in electrophotography, characterised by the steps of temporarily storing said input print signal per primary scanning line, of outputting a plurality of times said print signal per primary scanning line to said line head, and of repeating as many times the line emission of said line head in the primary scanning direction for each primary scanning line.

According to another aspect of the present invention, there is provided an edge emission type electroluminescent printer (11) comprising a line head (29) constituted by m x n edge emission type electroluminescent devices (2) connected in matrix pattern to "m" common electrodes (32) and "n" block electrodes (30), said line head being located adjacent to a photosensitive body so that said body continuously moves relative to said line head for secondary scanning, characterised by a plurality of line memories (22,23), a switching means (16) and a timing controller (17), said line memories being arranged to be switched by said switching means so as to temporarily store an input signal per primary scanning line, and further characterised by means for (31, 27, 28), under control of the timing controller (17), outputting the print signal for each primary scanning line a predetermined number of times from said line memories to said line head.

According to an embodiment of the present invention, the line head is connected in parallel with the line memories. The temporarily stored print signal for one primary scanning line in the line memories is output a predetermined number of times to the line head.

According to another embodiment of the present invention, the line memories are connected to the line head via pluralities of shift registers, latches and exclusive OR circuits which are individually subjected to time division control by a timing controller.

In the setup above, an input print signal is stored temporarily for each primary scanning line. The temporarily stored signal for one primary scanning line is output a plurality of times to the line head so that the head generates as many line emissions. This minimizes timing discrepancies that may occur in dots of each primary scanning line printed within each block. The result is that the edges of the printed primary scanning line are not serrated. Because the edge emission type EL devices each generate a plurality of emissions in the secondary scanning direction to form a single dot, spurious white spots do not occur in that direction even when the light emitted by the devices is very flatly polarized.

### BRIEF DESCRIPTION OF THE DRAWINGS:

Fig. 1 is a block diagram of a first and a second embodiment of the present invention;
Figs. 2 and 3 are timing charts associated with the first and second embodiments;
Fig. 4 is a printed image available with the first and second embodiments;
Fig. 5 is a block diagram of a third embodiment of the present invention;
Fig. 6 is a timing chart associated with the third embodiment;
Fig. 7 is a block diagram of a fourth embodiment of the present invention;
Fig. 8 is a timing chart associated with the fourth embodiment;
Fig. 9 is a view illustrating how an IC for use with the fourth embodiment is internally constructed;
Fig. 10 is a timing chart associated with the fourth embodiment;
Fig. 11 is a perspective view of an array of light-emitting devices for use in a prior art line printer;
Fig. 12 is a perspective view of an edge emission type EL device for use with the preferred embodiments of the present invention;
Fig. 13 is a view depicting a circuit construction that this applicant has proposed;
Fig. 14 is a timing chart associated with the prior art line printer; and
Fig. 15 is a printed image available by use of the prior art line printer.

### DETAILED DESCRIPTION OF PREFERRED EMBODIMENTS:

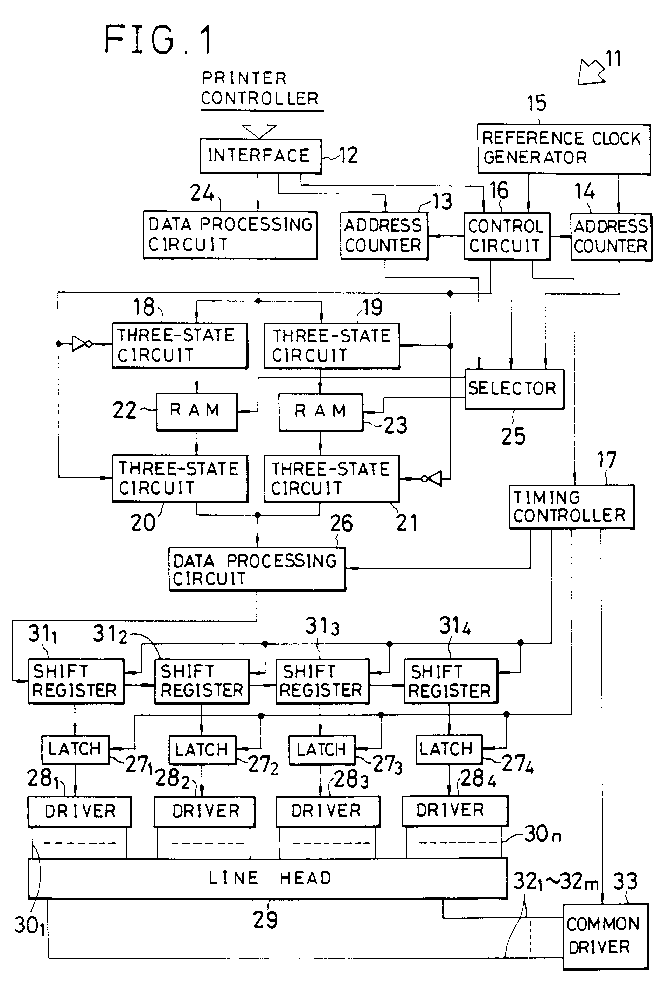

A first and a second embodiment of the present invention will now be described by referring to Figs. 1 through 4. The optical mechanism and its related parts of an edge emission type EL printer 11 as implemented in these embodiments are the same in construction as those of the line printer 1 mentioned above. A driving circuit of the EL printer 11 is the first to be described in reference to the block diagram of Fig. 1. An interface 12 is connected to a timing controller 17 via a control circuit 16 to which two address counters 13 and 14 and a reference clock generator 15 are connected. The interface 12 is also connected, via a first data processing circuit 24, to two RAMs 22 and 23 which are line memories whose inputs and outputs are connected to three-state circuits 18 through 21. To the RAMs 22 and 23 are connected the control circuit 16, which acts as a switching means, and the address counters 13 and 14 via a selector 25. The RAMs 22 and 23 are further connected to a second data processing circuit 26 via the three-state circuits 20 and 21. Four shift registers 31₁ through 31₄ are connected to block electrodes 30₁ through 30ₙ of a line head 29 via latches 27₁ through 27₄ and drivers 28₁ through 28₄. To the shift registers 31₁ through 31₄ is serially attached the data processing circuit 26 in cascade connection. The timing controller 17 is connected to the latches 27₁ through 27₄, to the shift registers 31₁ through 31₄, and to a common driver 33 which in turn is connected to common electrodes 32₁ through 32ₘ of the line head 29.

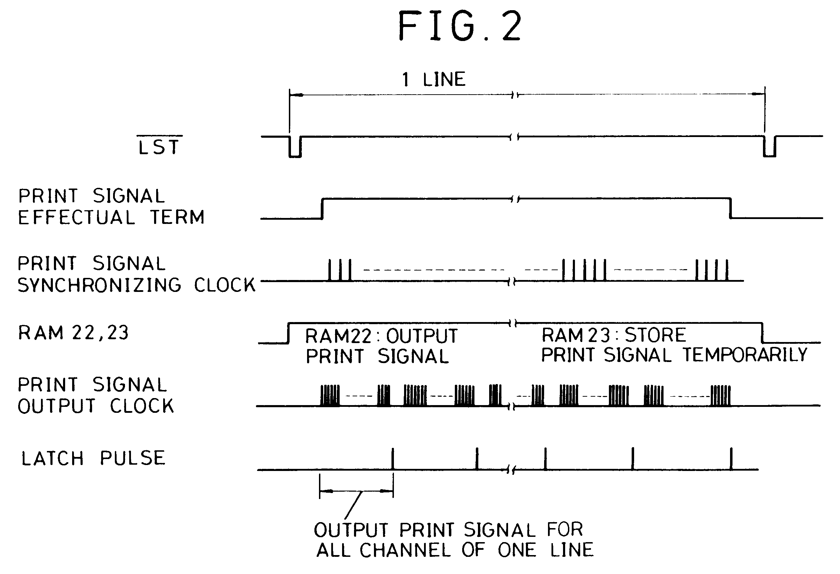

The edge emission type EL printer 11 of the above-described construction admits through the interface 12 a print signal that contains clock pulses. The print signal thus input is compressed per primary scanning line through rearrangement or other techniques by the first data processing circuit 24. Either the RAM 22 or the RAM 23 is selected for temporary signal storage. The compressed signal is forwarded from a printer controller through the interface 12 to the RAM 22 or 23 for temporary storage therein in accordance with the timing of the address counter 13 during the scanning of a single line. As shown in the timing chart of Fig. 2, the RAM for the temporary storage is selected by the selector 25, the address thereof being controlled by the address counter 13.

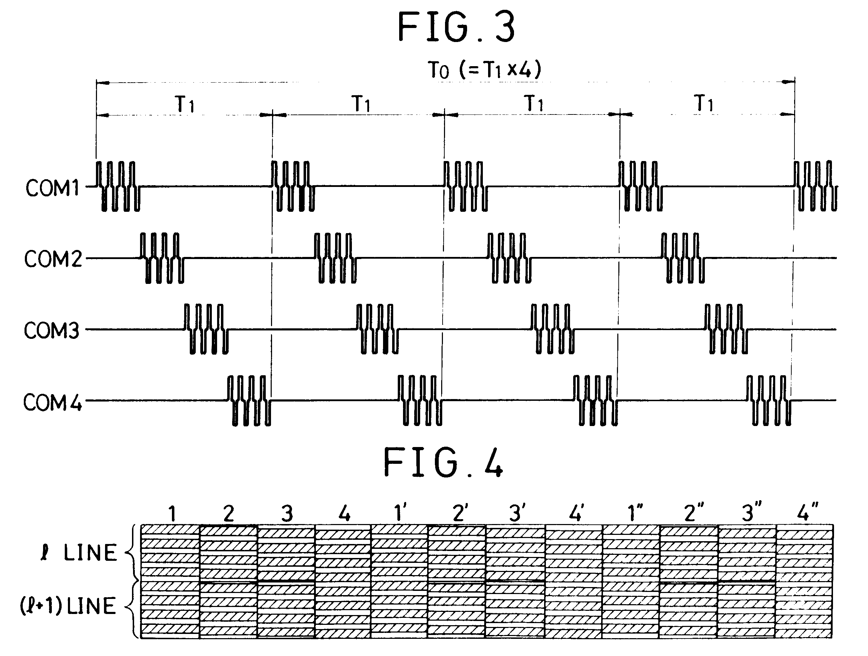

At this point, the edge emission type EL printer 11 causes the control circuit 16 and the address counter 14 to output from the other RAM, say 22, the print signal that was stored therein at high speed, the circuit and the counter being run in synchronization with high-speed output reference clock pulses generated by the reference clock generator 15. The output print signal is again processed by the second data processing circuit 26 into a format that is fit for printing. The processed signal is output serially to the shift registers 31₁ through 31₄ and is held by the latches 27₁ through 27₄. When the print signal for one line has been held, the signal is output to the line head 29 under control by the timing controller 17. As shown in the timing chart of Fig. 3, the edge emission type EL printer 11 performs the above-described operation four times during the time T₀ required to print one line. Thus the line head 29 generates four line emissions to provide for the width of one primary scanning line. The line thus printed (Fig. 4) has its serrated edge portions reduced to a quarter of those of the image illustrated in Fig. 15; the edges appear to be substantially flat. Because four light emissions constitute a single dot, the black portions within the dot are dispersed so that there are no visually recognizable spurious white spots therein.

It will be appreciated that the present invention is not limited to the edge emission type EL printer 11 of the first and second embodiments in which the two RAMs 22 and 23 are switched for storage and output of the print signal. Alternatively, a large number of RAMs may be used to accommodate requirements such as the signal processing speed of the first data processing circuit 24 and the printing speed of the line head 29. It will also be appreciated that the present invention is not limited to the arrangement of the edge emission type EL printer 11 whereby one primary scanning line is formed from four light emissions. Alternatively, the number of emissions for scanning by the line head 29 may be set as needed to allow for such factors as the responsiveness of edge emission type EL devices 2 and the circumferential speed of the photosensitive drum. It is also possible to increase the number of light emissions or to use a lens-based optical system concomitantly in order to overlay black portions within each dot so that no spurious white spots appear therein.

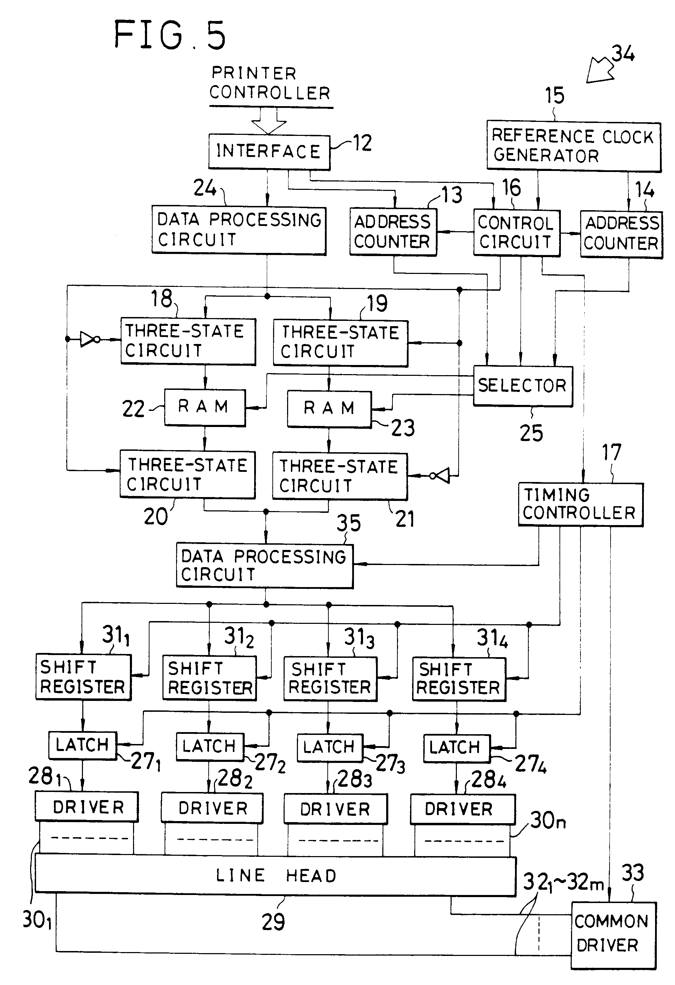

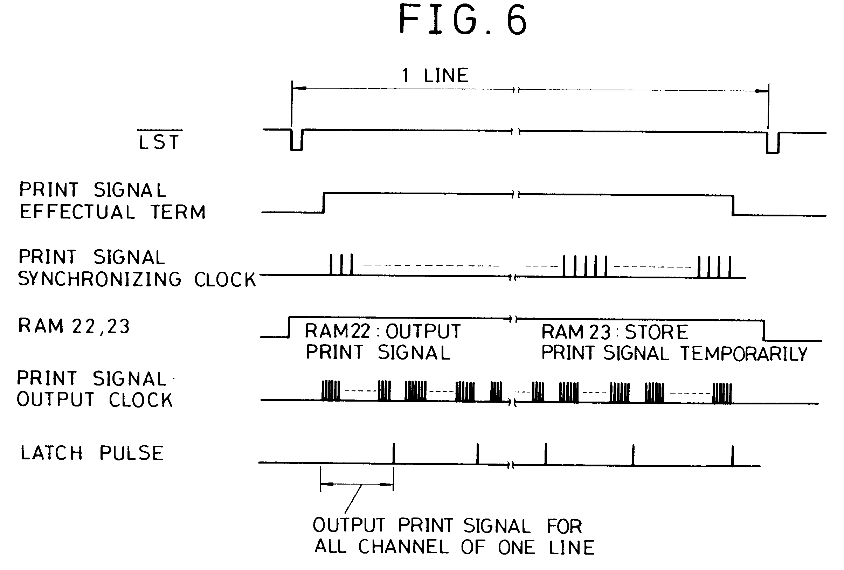

A third embodiment of the present invention will now be described by referring to Figs. 5 and 6. In an edge emission type EL printer 34 of this embodiment, a second data processing circuit 35 is connected in parallel to the four shift registers 31₁ through 31₄ which in turn are connected to the block electrodes 30₁ through 30ₙ. This construction is the same as that of the edge emission type EL printer 1 described above.

In the edge emission type EL printer 34 of this construction, the printed signal selectively output from the RAM 22 or 23 is processed by the second data processing circuit 35 into a format that is fit for printing. The signal thus processed is output in parallel to the shift registers 31₁ through 31₄. Then follow the same subsequent operations as those of the above-described edge emission type EL printer 11 until printing is completed. Because the second data processing circuit 35 is connected in parallel to the shift registers 31₁ through 31₄ in the edge emission type EL printer 34, print signal transmission can be performed at high speed for higher levels of print resolution.

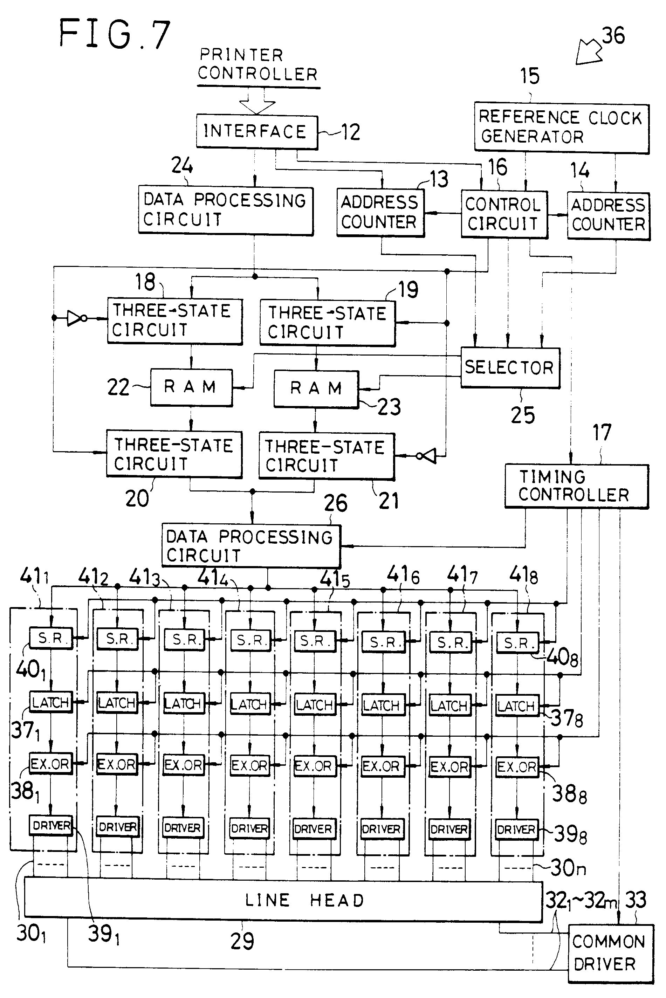

A fourth embodiment of the present invention will now be described by referring to Figs. 7 through 10. A driving circuit in an edge emission type EL printer 36 of this embodiment is the first to be described in reference to the block diagram of Fig. 7. The circuit construction ranging from the interface 12 to the second data processing circuit 26 is the same as that illustrated in the block diagram of Fig. 1. In the edge emission type EL printer 36, eight shift registers 40₁ through 40₈ are connected to the block electrodes 30₁ through 30ₙ of the line head 29 via latches 37₁ through 37₈, exclusive OR circuits 38₁ through 38₈, and drivers 39₁ through 39₈. To the eight shift registers 40₁ through 40₈ is connected the data processing circuit 26 in parallel. In this EL printer 36, the eight sets of parts 37 through 40 are incorporated in eight IC's 41₁ through 41₈, one set being assigned to one IC. The timing controller 17 connected to the common driver 33 is connected to the latches 37₁ through 37₈, to the shift registers 40₁ through 40₈, and to the exclusive OR circuits 38₁ through 38₈.

The edge emission type EL printer 36 of the above-described construction admits through the interface 12 a print signal containing clock pulses. The signal thus input is compressed per primary scanning line through rearrangement or other techniques for storage into either the RAM 22 or the RAM 23. That is, the print signal is stored temporarily in the RAM 22 or 23 that is selected under timing control by the address counter 13.

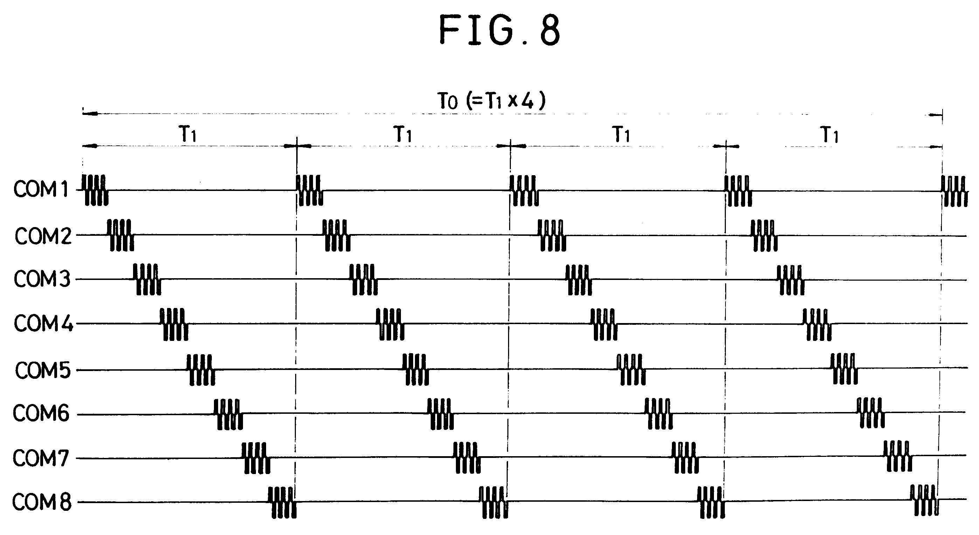

At this point, the edge emission type EL printer 11 causes the control circuit 16 and the address counter 14 to output from the other RAM the print signal that was stored therein at high speed, the circuit and the counter being run in synchronization with high-speed output reference clock pulses generated by the reference clock generator 15. The output print signal is again processed by the second data processing circuit 26 into a format that is fit for printing. The processed signal is output in parallel to the IC's 41₁ through 41₈ and held therein. The IC's 41₁ through 41₈ and the common driver 33 are controlled by the timing controller 17 so that the block electrodes 30₁ through 30ₙ and the common electrodes 32₁ through 32ₘ output low- and high-voltage driving pulses to the line head 29. As shown in the timing chart of Fig. 8, the edge emission type EL printer 36 performs the above-described operation four times during the time T₀ required to print one line. Subsequent operations are carried out in the same manner as with the above-described EL printer 1 to provide printing of high quality.

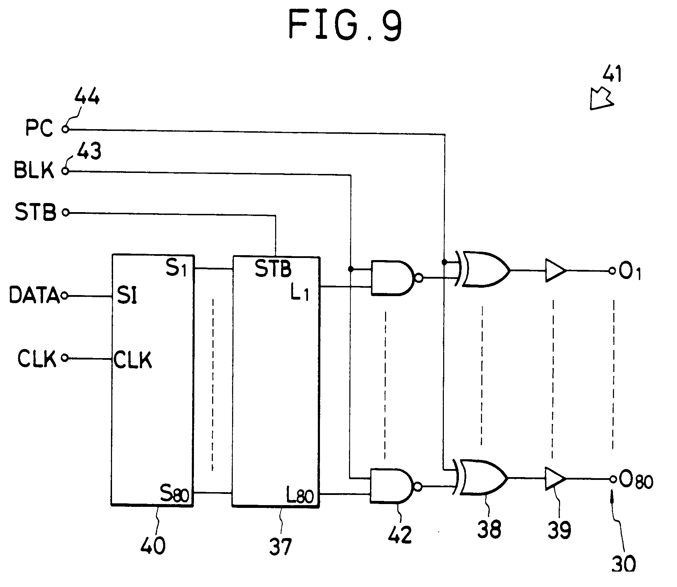

As illustrated in Fig. 9, each of the IC's 41₁ through 41₈ is constituted by 80 shift registers 40, 80 latches 37, 80 NAND circuits 42, 80 exclusive OR circuits 38 and 80 drivers 39. This means that one IC 41 may be connected to 80 block electrodes. One input terminal of each NAND circuit 42 is commonly connected within the IC 41 to a blank signal input terminal 43. Likewise, one input terminal of each exclusive OR circuit 38 is commonly connected to a PC (polarization control) signal input terminal 44.

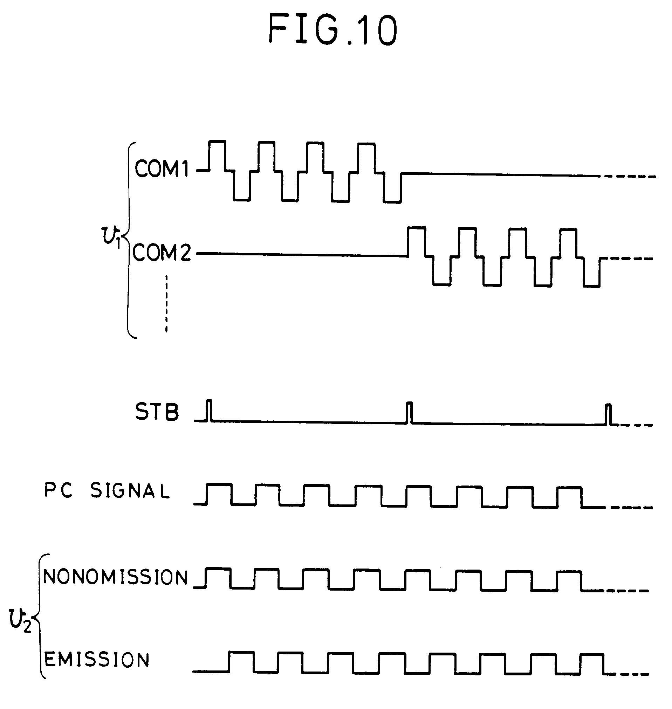

When the line head 29 is operating, the blank signal remains high. All drivers 39 are stopped by bringing the blank signal low and the PC signal high. On the other hand, with each exclusive OR circuit 38 holding the data from the latches 37, the PC signal controlled in synchronization with output pulses of the common driver 33 drives the line head 29 at high speed. As shown in the timing chart of Fig. 10, the edge emission type EL printer 36 thus outputs a latch signal every time another common electrode 32 is selected.

An edge emission type EL printer 36 capable of printing on A4 size sheets of paper is assumed here as an example. It is also assumed that the EL printer 36 has 8 (= m) common electrodes, 614 (= n) block electrodes, and 4,912 (= m x n) edge emission type EL devices to provide a dot density of 600 dots per inch (DPI) and a printing speed of 1.0 ms per line. In this case, the clock frequency for data transfer is computed as follows. Where four line emissions produce one line as indicated, T₀ = 1.0 ms. Then a single line emission lasts 0.25 ms (= T₁). It takes 31.25 µs (= T₃) to transfer data to one IC 41. Because 80 pieces of data are to be transferred during the period of 31.25 µs, it takes about 390 ns to transfer one piece of data given a clock frequency of, say, 2.56 MHz. This period is long enough to allow reliable access to the RAM 22 or 23. For the edge emission type EL printer 36, further improvements in the rate of signal transmission are provided by connecting the second data processing circuit 26 in parallel to the IC's 41₁ through 41₈.

Since there is a certain amount of time to spare for the edge emission type EL printer 36 of the fourth embodiment to carry out its data transmission within the unit time, it is easy to boost the optical scanning speed or to increase the number of the edge emission type EL devices 2 incorporated. These enhancements lead to implementing higher levels of print concentration, to attaining higher printing speeds, or to providing intermediate density gradation in printing expression of high concentration through the use of areal gradation.

As indicated, the input print signal is stored temporarily per primary scanning line. The signal thus stored for each primary scanning line is output a plurality of times to the line head so that the line head in turn generates as many line emissions to print one primary scanning line in the primary scanning direction. This arrangement minimizes the timing discrepancies that may occur when dots are printed within each block of the primary scanning line, thereby making the edges thereof not serrated but substantially flat. Because the edge emission type EL devices each generate a plurality of light emissions in the secondary scanning direction in order to produce one dot, there occur no spurious white dots in that direction even when the light emitted by each EL device is very flatly polarized. The improved print quality is one distinct advantage of the edge emission type EL printer and the printing method thereof according to the present invention.

## Claims

1. A printing method for an edge emission type electroluminescent printer (11) comprising a line head (29) constituted by m x n edge emission type EL devices (2) connected in matrix pattern to "m" common electrodes (32) and "n" block electrodes (30), said line head being located adjacent to a photosensitive body so that said body continuously moves relative to said line head for secondary scanning, said line head admitting a print signal so as to generate dot emission onto said photosensitive body for primary scanning in electrophotography, characterised by the steps of temporarily storing said input print signal per primary scanning line, of outputting a plurality of times said print signal per primary scanning line to said line head, and of repeating as many times the line emission of said line head in the primary scanning direction for each primary scanning line.

2. An edge emission type electroluminescent printer (11) comprising a line head (29) constituted by m x n edge emission type electroluminescent devices (2) connected in matrix pattern to "m" common electrodes (32) and "n" block electrodes (30), said line head being located adjacent to a photosensitive body so that said body continuously moves relative to said line head for secondary scanning, characterised by a plurality of line memories (22,23), a switching means (16) and a timing controller (17), said line memories being arranged to be switched by said switching means so as to temporarily store an input signal per primary scanning line, and further characterised by means for (31, 27, 28), under control of the timing controller (17), outputting the print signal for each primary scanning line a predetermined number of times from said line memories to said line head.

3. An edge emission type electroluminescent printer according to claim 2, characterised in that said line head (29) is connected in parallel to said line memories (22,23) so that said print signal per main scanning line temporarily stored in said line memories is output a predetermined number of times from said memories to said line head in parallel under control of the timing controller (17).

4. An edge emission type electroluminescent printer according to claim 2 or 3, characterised in that said line memories are connected to said line head via pluralities of shift registers, latches and exclusive OR circuits under time division control by a timing controller.

## Patentansprüche

1. Druckverfahren für einen Elektrolumineszenzdrucker des Randemissionstyps (11), der einen Zeilenkopf (29) umfaßt, der durch m x n randemittierende EL-Elemente (2) gebildet wird, die in einem Matrixmuster mit "m" gemeinsamen Elektroden (32) und "n" Blockelektroden (30) verbunden sind, wobei der Zeilenkopf angrenzend an einen lichtempfindlichen Körper gelegen ist, so daß sich dieser Körper zur sekundären Abtastung kontinuierlich relativ zu dem Zeilenkopf bewegt, wobei der Zeilenkopf ein Drucksignal einläßt, um eine Punktemission auf den lichtempfindlichen Körper zur elektrophotograpischen Primärabtastung zu erzeugen, gekennzeichnet durch die Schritte des vorübergehenden Speicherns des eingegebenen Drucksignals pro Primärabtastzeile, des mehrmaligen Ausgebens des Drucksignals pro Primärabtastzeile an den Zeilenkopf und des ebenso vielmaligen Wiederholens der Lichtemission des Zeilenkopfes in der Primärabtastrichtung für jede Primärabtastzeile.

2. Elektrolumineszenzdrucker des Randemissionstyps (11), der einen Zeilenkopf (29) umfaßt, der durch m x n randemittierende Elektrolumineszenzelemente (2) gebildet wird, die in einem Matrixmuster mit "m" gemeinsamen Elektroden (32) und "n" Blockelektroden (30) verbunden sind, wobei der Zeilenkopf angrenzend an einen lichtempfindlichen Körper gelegen ist, so daß sich dieser Körper zur Sekundärabtastung kontinuierlich relativ zu dem Zeilenkopf bewegt, gekennzeichnet durch eine Mehrzahl von Zeilenspeichern (22, 23), eine Schalteinrichtung (16) und eine Zeitsteuereinrichtung (17), wobei die Zeilenspeicher so eingerichtet sind, daß sie von der Schalteinrichtung geschaltet werden, um ein Eingangssignal pro Primärabtastzeile vorübergehend zu speichern, und weiter gekennzeichnet durch eine Einrichtung (31, 27, 28), die unter Steuerung der Zeitsteuereinrichtung (17) das Drucksignal für jede Primärabtastzeile eine vorbestimmte Anzahl von Malen von den Zeilenspeichern an den Zeilenkopf ausgibt.

3. Elektrolumineszenzdrucker des Randemissionstyps nach Anspruch 1, dadurch gekennzeichnet, daß der Zeilenkopf (29) mit den Zeilenspeichern (22, 23) parallel geschaltet ist, so daß das pro Hauptabtastzeile in den Zeilenspeichern zwischengespeicherte Drucksignal unter der Steuerung der Zeitsteuereinheit (17) eine vorbestimmte Anzahl von Malen von den Speichern an den Zeilenkopf parallel ausgegeben wird.

4. Elektrolumineszenzdrucker des Randemissionstyps nach Anspruch 2 oder 3, dadurch gekennzeichnet, daß die Zeilenspeicher unter Zeitmultiplexsteuerung durch eine Zeitsteuereinrichtung über eine Mehrzahl von Schieberegistern, Latchkreisen und Exklusiv-ODER-Kreisen mit dem Zeilenkopf verbunden sind.

## Revendications

1. Un procédé d'impression pour une imprimante électroluminescente du type à émission latérale (11) comprenant une tête de ligne (29) constituée par m x n dispositifs EL du type à émission latérale (2) reliés dans un motif matriciel à "m" électrodes communes (32) et "n" électrodes blocs (30), ladite tête de ligne étant placée de manière adjacente à un corps photosensible de sorte que ledit corps se déplace de manière continue par rapport à ladite tête de ligne en vue d'un balayage secondaire, ladite tête de ligne admettant un signal d'impression de manière à produire une émission de points sur ledit corps photosensible en vue d'un balayage primaire en électrophotographie, caractérisé par les opérations consistant à stocker de manière temporaire ledit signal d'impression d'entrée par ligne de balayage primaire, à délivrer plusieurs fois ledit signal d'impression par ligne de balayage primaire à ladite tête de ligne, et à répéter autant de fois l'émission de ligne de ladite tête de ligne dans la direction de balayage primaire pour chaque ligne de balayage primaire.

2. Une imprimante électroluminescente du type à émission latérale (11) comprenant une tête de ligne (29) constituée par m x n dispositifs électroluminescents du type à émission latérale (2) reliés dans un motif matriciel à "m" électrodes communes (32) et "n" électrodes blocs (30), ladite tête de ligne étant placée de manière adjacente à un corps photosensible de sorte que ledit corps se déplace de manière continue par rapport à ladite tête de ligne en vue d'un balayage secondaire, caractérisé par un ensemble de mémoires de ligne (22, 23), un moyen de commutation (16) et un organe de commande de synchronisation (17), lesdites mémoires de ligne étant prévues pour être commutées par ledit moyen de commutation afin de stocker de manière temporaire un signal d'entrée par ligne de balayage primaire, et caractérisé en outre par des moyens (31, 27, 28) pour, sous la commande de l'organe de commande de synchronisation (17), délivrer le signal d'impression pour chaque ligne de balayage primaire un nombre de fois prédéterminé à partir desdites mémoires de ligne vers ladite tête de ligne.

3. Une imprimante électroluminescente du type à émission latérale selon la revendication 2, caractérisée en ce que ladite tête de ligne (29) est reliée en parallèle auxdites mémoires de ligne (22, 23) de sorte que ledit signal d'impression par ligne de balayage principale stockée de manière temporaire dans lesdites mémoires de ligne est délivré un nombre de fois prédéterminé à partir desdites mémoires vers ladite tête de ligne en parallèle sous la commande de l'organe de commande de synchronisation (17).

4. Une imprimante électroluminescente du type à émission latérale selon la revendication 2 ou 3, caractérisée en ce que lesdites mémoires de ligne sont reliées à ladite tête de ligne par l'intermédiaire d'ensembles de registres à décalage, de verrous et de circuits OU exclusifs sous la commande de division dans le temps par un organe de commande de synchronisation.
